# EUROPEAN PATENT SPECIFICATION

(11) **EP 2 840 379 B1**
(45) Date of publication and mention of the grant of the patent: **08.05.2019**
(21) Application number: 13180167.2
(22) Date of filing: 13.08.2013
(51) Int. Cl.: G01N 15/08

(54) **An automated test method for testing risk and integrity of pharmaceutical filtration membranes**
Automatisiertes Verfahren zur Prüfung des Risikos und der Integrität von pharmazeutischen Filtrationsmembranen
Un procédé de test automatisé d'essais pour le risque et l'intégrité des membranes de filtration pharmaceutiques

(43) Date of publication of application: 25.02.2015
(73) Proprietor: Institute of Nuclear Energy Research, Atomic, 325 Taoyuan (TW)
(72) Inventor: Chiu, Shu-Pei, 325 LONGTAN, TAOYUAN (TW); Li, Ming-Hsin, 325 LONGTAN, TAOYUAN (TW); Chang, Chih-Hsien, 325 LONGTAN, TAOYUAN (TW); Lee, Te-Wei, 325 LONGTAN, TAOYUAN (TW)
(74) Representative: Lermer, Christoph

(56) References cited:
- DE-A1- 3 248 185
- US-A1- 2007 251 299
- Merck Millipore: "Downstream Processing", showbrochure , XP002718694, Retrieved from the Internet: URL:http://www.merckmillipore.com.br/showb rochure/201111.065.ProNet.pdf [retrieved on 2011-11-30]

## Description

### Background of the Invention

### 1. Field of the Invention

The present invention relates to an automated test method for risk and integrity testing for pharmaceutical filtration membranes and method thereof, in particular relates to the risk and integrity testing for pharmaceutical filtration membranes for preparation of aseptic pharmaceutical production, and its isolated apparatuses.

### 2. Description of related Art

Conventional method of medicine liquid filtration often used a filter to exert pressure and then a 0.2µm membrane for filtration. The membrane needs to undergo an integrity testing before and after the filtration to ensure complete blocking of microorganisms in the medicine liquid as a quality control standard to release the products. European GMP (PIC/S GMP Annex 1, Article 113) requests that membranes used as a filter for aseptic medicine preparation shall be sterilized and tested for its integrity before use, and shall also be verified after use with an appropriate test, for example, blistering point, diffusion flow or holding pressure test.

Although a confirmation of membrane integrity prior to use may reduce filtrate waste. Nevertheless, the approach of filtration test (Pre-Use Post Sterilization Integrity Test, PUPSIT) is still controversial, and a test operation in any form may increase the risk of contamination to the membrane, and the use of pre-test of integrity is to enhance the chance of contamination to the membrane. Moreover, if it is really damaged the membrane, the integrity test after use can be performed and detected, it is unnecessarily that the integrity testing has to be done prior to use. The only consensus reached is to adopt a risk assessment approach to determine whether to perform PUPSIT.

Although the confirmation of membrane integrity before use may reduce filtrate waste, one of disadvantages of the conventional approach is that any operation for the membrane integrity testing is likely to increase the risk of contamination, and the integrity test before use is one that increased probability of membrane contamination.

Another drawback of the conventional approach is that after completion of radiopharmaceuticals labeling, the present filter integrity testing begins with manual operation, that not only has the problem of radioactive exposure, there are test reproducibility and accuracy of the process need to be improved. If the drawback in these issues receives no proper treatment, it may result in excessive exposure and test result accuracy shortcomings to occur.

D1 (DE 3248185): The cited reference disclosed a method and an apparatus for testing the permeability of membrane filters. However, it didn't teach a pair of first solenoid valves for processing liquid reagent before a membrane and after filtration for both risk and integrity tests, and a pair of second solenoid valves for processing pressurized gas before a membrane and after filtration for both risk and integrity tests, respectively. And the pairs of solenoid valve are program controlled to perform sequential tests for both risk and integrity tests for the membrane. D2 (Merck Millipore: "Downstream Processing",showbrochure retrieved from the Internet:URL:http://www.merckmillipore.com.br/showbrochure/201111.065.ProNet.pdf) : The cited reference disclosed an application of hydrophilic 0.22 *µ*m cartridges for the removal of particles and the sterile filtration of liquids. It didn't teach the method and apparatus for both risk and integrity tests for the membrane.

D3 (US 2007/0251299 A1) : The cited reference disclosed an integrity test through observing a displacement of the liquid by one or more gas bubbles with a light beam. It didn't teach a pair of first solenoid valves for processing liquid reagent before a membrane and after filtration, and a pair of second solenoid valves for processing pressurized gas before a membrane and after filtration. And the pairs of solenoids are computer program controlled to perform sequential tests for both risk and integrity tests for the membrane.

US Patent No. US7770434 disclosed a method of medicine dispensing in-process integrity testing without dismantling filter membranes. However, it did not disclose a computer controlled automated integrity and risk testing for filter membrane, respectively, after and before filtration, and the outputs of filter membrane were not concurrently connected to bubble generating bottles and pharmaceutical product bottles, respectively.

In view of the above described drawbacks arising after the completion of radiopharmaceutical labeling during filter membranes integrity testing before and after filtering process, the inventors of the present invention are aiming for solving drawbacks in a way of continuous study and research and eventually this invention is presented.

### Summary of the Invention

The primary object of the present invention is to provide an automated test method for risk and integrity testing of radiopharmaceutical filtration membrane according to claim 1. Risk and integrity testing of pharmaceutical filtration membranes is operable by a computer automatic control system, for example, by measuring a bubble point pressure of the filter with maximum aperture for a 0.2µm membrane risk and integrity testing to ensure the effectiveness of the 0.2µm membrane integrity in production and subsequent process. The present invention is applicable to the production of nuclear medicine injections for the treatment and diagnosis with PET (Positron Emission Tomography) and SPECT (Single Photon Emission Computed Tomography), as well as nuclear medicine industry research and development, other related biologics pharmaceutical manufacturing processes and applications.

Another object not part of the present invention is to provide an automated test apparatus for risk and integrity testing of pharmaceutical filtration membranes. It is to provide an integrated automated control system for membrane risk and integrity testing in place of traditional method that is dependent from other devices, or manual operation, or indirect proof of test result, and effectively prevent outside environment from polluting to pharmaceutical bottles. It is also an object of the present invention to reduce the pollution from manual operation and exposure radioactive dose to person's hand to mitigate the stringent requirements for environmental equipments, and adequately save the cost of production and investment while retaining production efficiency and simplification in principle.

Another object of the present invention to provide an automated test method for risk and integrity testing of pharmaceutical filtration membranes for filtering medicine while monitoring whether its steep drop exists in filtration pressure. It has sufficient evidences to prove that the level of damage probability of the filter membrane in the filtration process is properly controlled, and after the completion of filtration, the membrane integrity test is performed. The pre-use post sterilization integrity test (PUPSIT) and post-filtration integrity test are also considered in the present invention in order to achieve the requirements of risk assessment and good manufacture practice (GMP) regulation.

Another object of the present invention is to accomplish a sterility assurance in an automatic manner, including membrane risk test, membrane integrity test, as well as a device isolating process. In accordance with the sterile filter membrane specification, the membrane risk test is conducted and completed in process to justify the integrity of then used filter and confirm immediately after use with an automated method for bubble point pressure test, wherein the flow lines and bottle sets were sterilized or cleaned with procedures in line with GMP requirements. The present invention uses computer implemented automation to replace traditional manual method to achieve the risk control that couldn't be done previously. The control method of the present invention can effectively obviate the complexity in pharmaceutical production, and address the issue of personnel radioactive exposure and the likes, and in compliance with current economic efficacy.

Another object not part of the present invention is to provide an automated test apparatus for risk and integrity testing of pharmaceutical filtration membranes, which is capable of conducting an independent operation for filter membrane testing and connecting with other automation modules to carry out on-line filter membrane testing.

To achieve the above objects, the technical features of the automated test apparatus for risk and integrity testing of pharmaceutical filtration membrane not part of the present invention comprising a liquid inlet, a pump, a fluid pressure gauge, a gas pressure gauge, a plurality of solenoid valves, a plurality of membranes, a gas pressure regulating valve, a bottle of pharmaceutical product, and a bottle of bubble generation. The present invention is controlled by computer software and connected with a pharmaceutical automatic synthesis device for automatic testing operation. To use the automated test apparatus for risk and integrity testing of pharmaceutical filtration membrane, when the pharmaceutical synthesis is completed, it only needs to start the operation system of the automated test apparatus, one can complete filter membrane risk and integrity testing in a short time to provide important references for pharmaceutical quality assessment.

As aforementioned, the automated test apparatus for risk and integrity testing of pharmaceutical filtration membrane can be operated independently or in connection with other automation modules for online filter membranes testing.

The technical features of the automated test method for risk and integrity testing of pharmaceutical filtration membrane of the present invention comprising:
1. Risk testing by gas, comprising at least the following steps:
   Step S11: passing nitrogen or an inert gas of 0.35 bar (5 psi) gauge pressure through a membrane disposed in a dried state;
   Step S12: conveying nitrogen or inert gas into bubbles bottles through a solenoid valve to observe conditions of bubble generation.
2. Risk testing by liquid, comprising at least the following steps:
   Step S21: passing pharmaceutical product through a membrane for filtration with nitrogen or an inert gas of 1.38∼1.72 bar (20 ∼ 25 psi) gauge pressure;
   Step S22: collecting the pharmaceutical product in a pharmaceutical vial after the filtration;
   Step S23: passing gas through the membrane in moist state and checking the gas gauge pressure if it is maintained at the same as in step S21or plunged in a range of 0.35 ∼0.83 bar (5 ∼ 12 psi) to determine if holes exist in the membrane.
3. Integrity test by gas, comprising at least the following steps:
   Step S31: passing nitrogen or an inert gas of 1.38∼1.72 bar (20 ∼ 25 psi) gauge pressure through a membrane;
   Step S32: checking the gas gauge pressure if it is maintained at the same as in step S31or plunged in a range of 0.35 ∼0.83 bar (5 ∼ 12 psi) to determine the integrity of the membrane after production.

The above and other objects, features and advantages of the present invention will become apparent from the following detailed description taken with the accompanying drawings.

### Brief Description of the Drawings

Fig. 1 shows a schematic diagram of integrity testing of a membrane in a prior art;
Fig. 2 shows a schematic diagram of an automated test apparatus for risk and integrity testing of pharmaceutical filtration membrane not covered by the present invention;
Fig. 3 shows an operational flow diagram of an automated test method for risk and integrity testing of pharmaceutical filtration membrane of the present invention.

### Detailed Description of the Preferred Embodiment

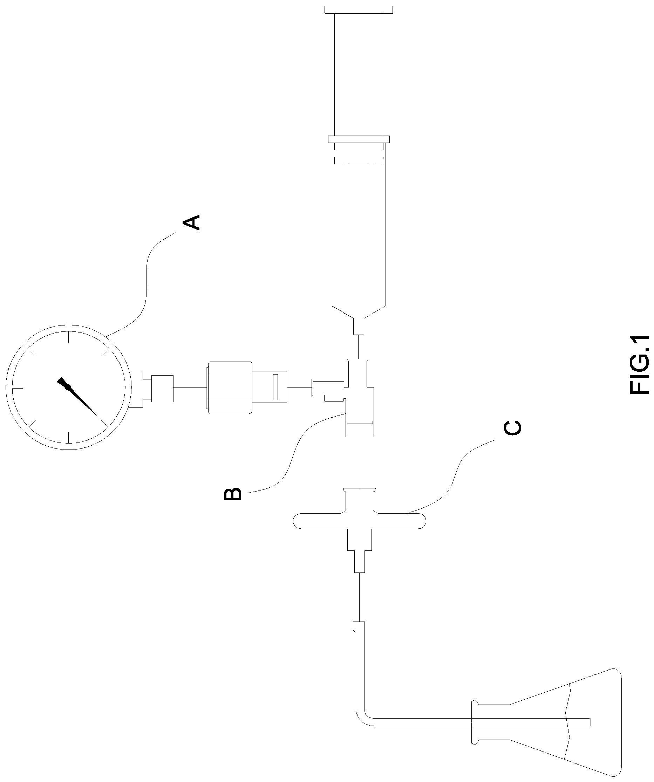

Fig. 1 is a prior art of integrity testing of a membrane with drawbacks as aforementioned and will not reiterate herewith.

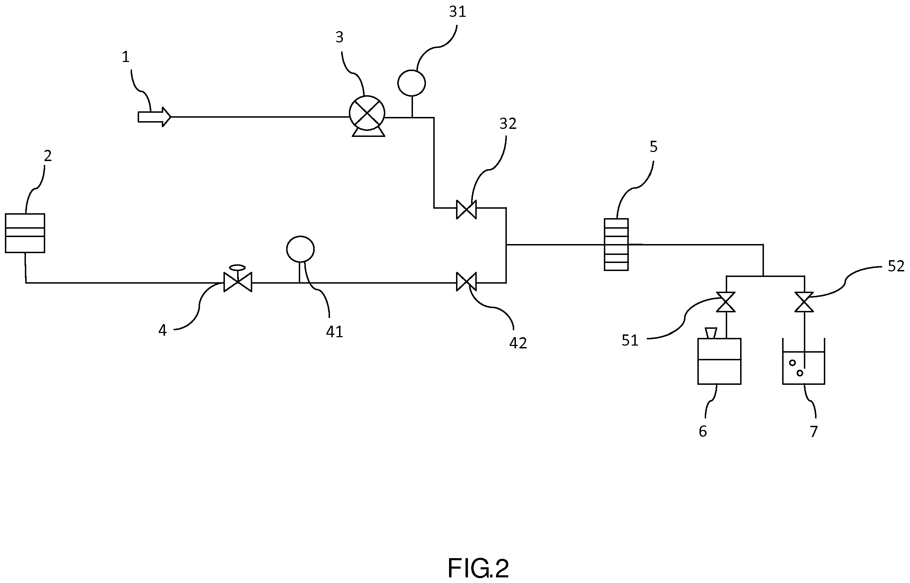

Fig. 2 is a schematic diagram of an automated test apparatus for risk and integrity testing of pharmaceutical filtration membrane. The apparatus at least comprises: a liquid injection port 1 for injecting a liquid reagent; a pump 3 for feeding the liquid reagent; a gas compressor 2 for conveying gases needed for risk and integrity testing into the membrane; a fluid pressure gauge 31 for testing reagents; a first input solenoid valve 32 for passing the liquid reagent through the membrane 5; a gas pressure regulator valve 4 for regulating gas pressure for membrane risk and integrity testing; a gas pressure gauge 41for testing gas pressure of membrane risk and integrity testing, a second input solenoid valve 42 for passing gas through the membrane 5; a plurality of filtration membrane 5 for filtering the liquid reagent and testing gas; a first output solenoid valve 51 for output of the liquid reagent after filtration; a second output solenoid valve 52 for output of testing gas for membrane risk and integrity testing; a pharmaceutical product bottle 6 for receiving injection of the liquid reagent after filtration; a bubble bottle 7 for observing bubble generated for membrane integrity testing. In one of the preferred embodiment of the present invention, the membrane 5 uses 0.22um membrane.

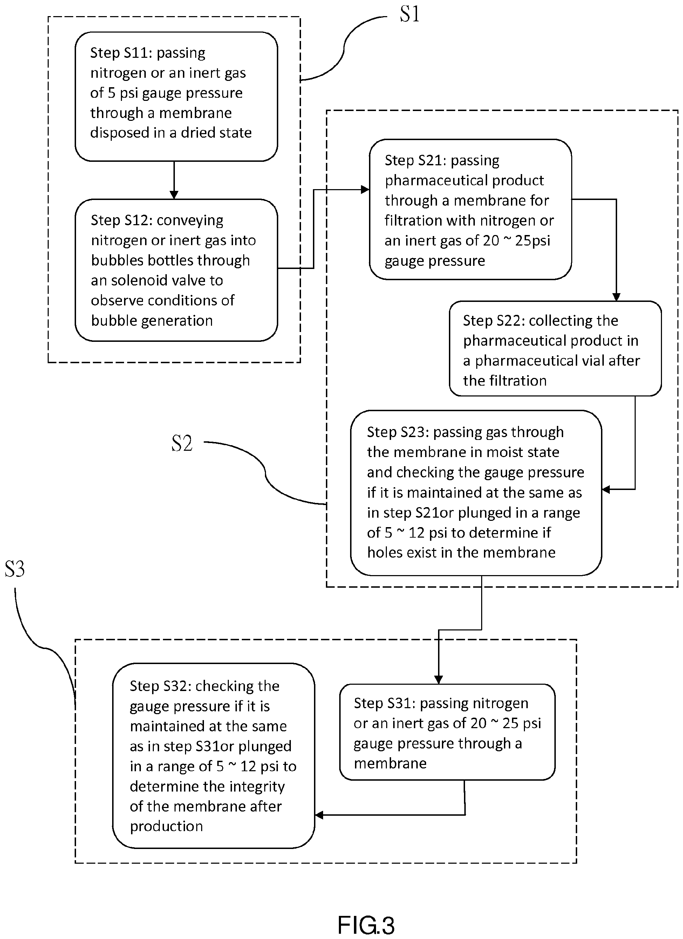

Fig. 3 shows an operation flow diagram of an automated test method for risk and integrity testing of pharmaceutical filtration membrane of the present invention, in which, (1) the risk testing by gas for the filtration membrane of the present invention S1 including at least Step S11: with first input solenoid valve 32 inactivated and second input solenoid valve 42 activated, conveying nitrogen or an inert gas of 0.35 bar (5 psi) via gas pressure gauge 41 through the filtration membrane 5 disposed in a dried state; Step S12: with first output solenoid valve 51 inactivated and second output solenoid valve 52 activated, conveying the nitrogen or inert gas into bubble bottle 7 to observe conditions of bubble generation, and (2) the risk testing by liquid for the filtration membrane of the present invention S2 including at least Step S21: with first input solenoid valve 32 activated and second input solenoid valve 42 inactivated,passing radiopharmaceutical product with nitrogen or an inert gas of 1.38∼1.72 bar (20 ∼ 25 psi) via fluid pressure gauge 31 through the filtration membrane 5; S22: with first output solenoid valve 51 activated and solenoid valve 52 inactivated, collecting pharmaceutical product after filtration through membrane 5 in bottle 6; S23: passing gas through the filtration membrane 5 in moist state and checking the gas pressure gauge 41, if it is maintained in a range of 1.38∼1.72 bar (20 ∼ 25 psi), it indicates no holes exist, or plunged in a range of 0.35 ∼0.83 bar (5 ∼ 12 psi), it indicates holes exist, for determination of the risk of the filtration membrane.

When the two risk tests abovementioned were completed, it proceeds to (3) the filtration integrity testing S3 including at least: Step S31: with first input solenoid valve 32 inactivated and second input solenoid valve 42 activated, conveying nitrogen or an inert gas of 1.38∼1.72 bar (20 ∼ 25 psi) via fluid pressure gauge 31 through the filtration membrane 5; Step S32: with first output solenoid valve 51 inactivated and solenoid valve 52 activated, conveying nitrogen gas into the bubble generation bottle 7, observing condition of bubble generation and checking gas pressure gauge 41, if it is maintained in a range of 1.38∼1.72 bar (20 ∼ 25 psi), it indicates the integrity testing of the filtration 5 after the production of pharmaceutical is acceptable, or unacceptable if it is plunged in a range of 1.38∼1.72 bar (20 ∼ 25 psi).

When the membrane 5 is dry, the exerting pressure of gas pressure gauge is subject to about 0.35 bar (5psi).

When the membrane 5 is wet and having holes, the exerting pressure of the gas pressure gauge is subject to in a range about 1.38∼1.72 bar (20 ∼ 25 psi).

When the membrane 5 is wet and in integrity without holes, the exerting pressure of the gas pressure gauge is subject to in a range about 1.38∼1.72 bar (20 ∼ 25 psi).

From the above it is understood that the automated test method for risk and integrity testing of pharmaceutical filtration membrane of the present invention can improve production efficiency, simplify operational processes, reduce the risk of contamination with radioactive pharmaceuticals, and resolve issues of personnel exposure of radioactive dose. The foregoing invention has been described in detail by way of illustration and example for purposes of clarity and understanding.

## Claims

1. An automated test method for risk and integrity testing of radiopharmaceutical filtration membrane comprising:
(1) risk testing by gas, comprising following steps:
Step S11: passing nitrogen or an inert gas of 0.35 bar (5 psi) gauge pressure through a membrane disposed in a dried state;
Step S12: conveying nitrogen or inert gas into bubbles bottles through a solenoid valve to observe conditions of bubble generation.
(2) risk testing by liquid, comprising at least the following steps:
Step S21: passing radiopharmaceutical product through a membrane for filtration with nitrogen or an inert gas of 1.38 to 1.72 bar (20 to 25 psi) gauge pressure;
Step S22: collecting the radiopharmaceutical product in a radiopharmaceutical vial after the filtration;
Step S23: passing gas through the membrane in moist state and checking the gas gauge pressure if it is maintained at the same as in step S21or plunged in a range of 0.35-0.83 bar (5 ∼ 12 psi) to determine if holes exist in the membrane.
(3) integrity test by gas, comprising at least the following steps:
Step S31: passing nitrogen or an inert gas of 1.38 to 1.72 bar (20 to 25 psi) gauge pressure through a membrane;
Step S32: checking the gauge pressure if it is maintained at the same as in step S31or plunged in a range of 0.35 ∼0.83 bar (5 ∼ 12 psi) to determine the integrity of the membrane after production.

2. The automated test method for risk and integrity testing of radiopharmaceutical filtration membrane of claim 1, wherein the gas in step S23 is nitrogen or an inert gas.

## Patentansprüche

1. Automatisiertes Testverfahren zur Risiko- und Integritätsprüfung von radiopharmazeutischen Filtrationsmembranen, umfassend:
(1) Risikoprüfung durch Gas, umfassend die folgenden Schritte:
Schritt S11: Durchleiten von Stickstoff oder eines Inertgases mit einem Überdruck von 0,35 bar (5 psi) durch eine Membran, die in einem getrockneten Zustand angeordnet ist;
Schritt S12: Befördern von Stickstoff oder Inertgas in Blasenflaschen durch ein Magnetventil, um die Bedingungen der Blasenerzeugung zu beobachten.
(2) Risikoprüfung durch eine Flüssigkeit, umfassend mindestens die folgenden Schritte:
Schritt S21: Durchleiten eines radiopharmazeutischen Produkts durch eine Membran zur Filtration mit Stickstoff oder einem Inertgas mit einem Überdruck von 1,38 bis 1,72 bar (20 bis 25 psi);
Schritt S22: Sammeln des radiopharmazeutischen Produkts in einem radiopharmazeutischen Fläschchen nach der Filtration;
Schritt S23: Durchleiten von Gas durch die Membran in feuchtem Zustand und Prüfen des Gasdrucks, ob er auf dem gleichen Wert wie in Schritt S21 gehalten wird oder in einen Bereich von 0,35 bis 0,83 bar (5 bis 12 psi) gefallen ist, um zu bestimmen, ob Löcher in der Membran vorhanden sind
(3) Integritätstest durch Gas, umfassend mindestens die folgenden Schritte
Schritt S31: Durchleiten von Stickstoff oder eines Inertgases mit einem Überdruck von 1,38 bis 1,72 bar (20 bis 25 psi) durch eine Membran;
Schritt S32: Prüfen des Überdrucks, ob er auf dem gleichen Wert wie in Schritt S31 gehalten wird oder in einen Bereich von 0,35 bis 0,83 bar (5 bis 12 psi) gefallen ist, um die Unversehrtheit der Membran nach der Herstellung zu bestimmen.

2. Automatisiertes Testverfahren zur Risiko- und Integritätsprüfung einer radiopharmazeutischen Filtrationsmembran nach Anspruch 1, wobei das Gas in Schritt S23 Stickstoff oder ein Inertgas ist.

## Revendications

1. Procédé automatisé d'essais destiné au test de risque et de l'intégrité de membrane de filtration radiopharmaceutique comprenant :
(1) test de risque par un gaz, comprenant les étapes suivantes :
Étape S11 : passage d'azote ou d'un gaz inerte à une pression manométrique de 0,35 bars (5 psi) à travers une membrane disposée dans un état séché ;
Étape S12 : transport d'azote ou d'un gaz inerte dans des éprouvettes bouillantes à travers une vanne électromagnétique afin d'observer les conditions de génération de bulles.
(2) test de risque par un liquide, comprenant les étapes suivantes :
Étape S21 : passage d'un produit radiopharmaceutique travers une membrane destinée à la filtration avec de l'azote ou un gaz inerte à une pression manométrique comprise entre 1,38 et 1,72 bars (entre 20 et 25 psi) ;
Étape S22 : collecte du produit radiopharmaceutique dans un flacon radiopharmaceutique après la filtration ;
Étape S23 : passage de gaz à travers la membrane dans un état humide et vérification de la pression manométrique de gaz si elle est maintenue identique à l'étape S21 ou comprise dans une plage de 0,35 à 0,83 bars (entre environ 5 et 12 psi) afin de déterminer si des trous existent dans la membrane.
(3) test d'intégrité par un gaz, comprenant au moins les étapes suivantes :
Étape S31 : passage d'azote ou d'un gaz inerte à travers une membrane à une pression manométrique comprise entre 1,38 et 1,72 bars (entre 20 et 25 psi) ;
Étape S32 : vérification de la pression manométrique de gaz si elle est maintenue identique à l'étape S31 ou comprise dans une plage de 0,35 à 0,83 bars (entre environ 5 et 12 psi) afin de déterminer l'intégrité de la membrane après production.

2. Procédé automatisé d'essais destiné au test de risque et de l'intégrité de membrane de filtration radiopharmaceutique selon la revendication 1, dans lequel le gaz dans l'étape S23 est l'azote ou un gaz inerte.
